# EUROPÄISCHE PATENTANMELDUNG

(11) **EP 4 234 971 A1**
(43) Veröffentlichungstag der Anmeldung: **30.08.2023**
(21) Anmeldenummer: 23154611.0
(22) Anmeldetag: 02.02.2023
(51) Int. Cl.: F16F 9/02, B60G 17/052, F16F 9/43

(54) **VENTIL UND VERFAHREN ZU DESSEN HERSTELLUNG**

(30) Priorität: 23.02.2022 DE 102022104245
(71) Anmelder: Vibracoustic SE, 64293 Darmstadt (DE)
(72) Erfinder: Werner, Dr. Philipp, 21339 Lüneburg (DE); Weber, Michael, 21244 Buchholz (DE)
(74) Vertreter: Patentanwälte Olbricht Buchhold Keulertz

(57) **Zusammenfassung**

Vorgeschlagen wird ein Ventil für eine Luftfeder, umfassend einen Gehäusekörper (4), der von einer Zentrallängsachse (Z) durchsetzt ist und einen Kanal (10) umfasst, wobei der Gehäusekörper (4) ein erstes Element (7) und ein zweites Element (9) umfasst, welche vermittels einer Stoffschlussverbindung in einem ersten Bereich (92) verbunden sind und in einem zweiten Bereich (94) aneinander anliegen oder unmittelbar benachbart zueinander angeordnet sind, wobei im Kanal (10) ein Dichtmittel (28) angeordnet ist, welches den Kanal (10) verschließen oder den effektiven Öffnungsquerschnitt des Kanals (10) reduzieren kann, wobei das Ventil (2) ein Kanalelement (72) umfasst, welches den Kanal (10) zumindest abschnittsweise führt oder ausbildet, wobei das Kanalelement (72) im Gehäusekörper (4) form- und/oder kraftschlüssig fixiert ist und das Kanalelement (72) das Dichtmittel (28) in einem dritten Bereich (96) zwischen sich und dem zweiten Element (9) hält oder das Kanalelement (72) im oder am ersten Element (7) form- und/oder kraftschlüssig fixiert ist und das Kanalelement (72) das Dichtmittel (28) in einem dritten Bereich (96) zwischen sich und dem ersten Element (7) hält.

## Beschreibung

Die Erfindung betrifft ein Ventil gemäß dem Oberbegriff von Anspruch 1 und ein Verfahren zu dessen Herstellung gemäß Anspruch 10.

Ventile zum Befüllen eines Volumens sind aus der Praxis bekannt. Beispielsweise können derartige Ventile einem Luftfedervolumen einer Luftfeder zugeordnet sein und einen Luftstrom in das Luftfedervolumen hinein ermöglichen oder verhindern.

Luftfedern können ein Fahrzeug auf einem konstanten Niveau halten, unabhängig davon, wie schwer es beladen ist. Sie können ermöglichen, dass ein Fahrzeug bei hohen Geschwindigkeiten abgesenkt wird, um die Aerodynamik und damit die Reichweite zu verbessern. Luftfedern können auch den Luftstrom unter dem Fahrzeug für die passive Batteriekühlung in Elektrofahrzeugen optimieren. Sie schützen die Batterien bei schlechten Straßenverhältnissen und sichern immer eine minimale Bodenfreiheit. Als Federung von Nutzfahrzeugkabinen eingesetzt, können Luftfedern die Kabine auf einem konstanten Niveau halten, unabhängig vom Eigengewicht oder Beladungszustand der Kabine. Da die Bremsen bei Nutzfahrzeugen pneumatisch betrieben sind, sind die Kompressoren für die Druckluftversorgung bei Nutzfahrzeugen wesentlich leistungsstärker als im Personenkraftverkehr eingesetzte Kompressoren. Wird der für die Bremsversorgung bestimmte Kompressor ebenfalls für die Druckluftversorgung der Luftfeder genutzt, ist hierdurch zwar Druckluft in ausreichender Menge vorhanden, das System zeichnet sich jedoch eher durch Robustheit aus und nicht durch geringe Druckschwankungen.

Die Verwendung von Ventilen in Luftfedern ist zum Beispiel aus der DE 10 2011 114 570 B4 bekannt. Die Ventile werden dabei zum Einlassen von Luft aus einer Luftzufuhr in ein Luftfedervolumen und zum Ablassen von Luft aus dem Luftfedervolumen in eine Umgebung verwendet.

Aus der Praxis ist zudem ein Ventil für eine Luftfeder bekannt, welches einen Gehäusekörper umfasst, der einen Kanal aufweist, wobei der Gehäusekörper ein erstes Element und ein zweites Element umfasst. Diese beiden Elemente sind vermittels einer Schweißnaht in einem ersten Bereich verbunden und liegen in einem zweiten Bereich aneinander an. Im Kanal ist ein elastisches Dichtmittel angeordnet, welches den Kanal verschließen kann. Bei diesem Ventil wird das Dichtmittel zwischen dem ersten Element und dem zweiten Element mit einer Klemmkraft eingeklemmt, wobei diese Klemmkraft erzeugt ist durch auf beide Körper aufgebrachte Montageklemmkräfte, während diese miteinander im ersten Bereich verschweißt werden. Die Montageklemmkräfte legen die Klemmkraft fest, das Verschweißen fixiert die Klemmkraft. Diese Konstruktion ist jedoch problembehaftet.

Hierdurch muss nämlich die Schweißnaht nicht nur die Dichtigkeit des Systems herstellen, sondern wird auch mit der Klemmkraft belastet. Das führt dazu, dass das Abkühlen der Schweißnaht so weit fortgeschritten sein muss, dass die Klemmkraft durch die Schweißnaht aufrechterhalten werden kann. Hierdurch sind Abkühlzeiten nach dem Schweißen zu berücksichtigen, bevor die äußeren Montageklemmkräfte von den beiden Gehäuseelementen gelöst werden können. Zudem wird die Schweißnaht während des Betriebs permanent durch die Klemmkraft des Dichtmittels belastet, was das Risiko einer Leckage im Falle einer nicht perfekten Ausführung der Schweißnaht erhöht.

Darüber hinaus erfordert diese Konstruktion bei der Herstellung der einzelnen Gehäuseelemente ein aufwendiges Schieberwerkzeug, da quer verlaufende Durchflussöffnungen nicht mit einem einfachen "Auf-Zu-Werkzeug" herstellbar sind. So sind insbesondere strömungstechnisch optimierte Durchflussöffnungen nur bedingt darstellbar, da die Geometrien durch Ziehen eines Schieberwerkzeugs hergestellt werden müssen. Hinterschnitte, wie sie beispielsweise durch das Verrunden von Öffnungen auf der Innenseite der Öffnung für die Vermeidung von Strömungs- oder Pfeifgeräuschen denkbar wären, können mit einem derartigen Werkzeugkonzept nicht hergestellt werden.

Aufgabe der Erfindung ist es daher, ein Ventil zu schaffen, dessen Fertigung kostengünstiger und robuster erfolgen kann, wobei zudem eine verbesserte Festlegung des Dichtmittels vorhanden sein soll.

Hauptmerkmale der Erfindung sind im kennzeichnenden Teil von Anspruch 1 und in Anspruch 10 angegeben. Beanspruchte Ausgestaltungen sind Gegenstand der Ansprüche 2 bis 9.

Erfindungsgemäß wird ein Ventil für eine Luftfeder vorgeschlagen, umfassend einen Gehäusekörper, der von einer Zentrallängsachse durchsetzt ist und einen Kanal umfasst, wobei der Gehäusekörper ein erstes Element und ein zweites Element umfasst, welche vermittels einer Stoffschlussverbindung in einem ersten Bereich verbunden sind und in einem zweiten Bereich aneinander anliegen oder unmittelbar benachbart zueinander angeordnet sind, wobei im Kanal ein Dichtmittel angeordnet ist, welches den Kanal verschließen oder den effektiven Öffnungsquerschnitt des Kanals reduzieren kann, wobei das Ventil ein Kanalelement umfasst, welches den Kanal zumindest abschnittsweise führt oder ausbildet, wobei entweder
- das Kanalelement im Gehäusekörper form- und/oder kraftschlüssig fixiert ist und das Kanalelement das Dichtmittel in einem dritten Bereich zwischen sich und dem zweiten Element hält oder
- das Kanalelement im oder am ersten Element form- und/oder kraftschlüssig fixiert ist und das Kanalelement das Dichtmittel in einem dritten Bereich zwischen sich und dem ersten Element hält.

In erfindungsgemäßer Weise ist das Kanalelement zum Halten des Dichtmittels vorgesehen und das Kanalelement ist zudem in erfindungsgemäßer Weise form- und/oder kraftschlüssig fixiert. Diese Fixierung ist stoffschlussfrei, das heißt, dass das Dichtmittel zumindest teilweise, vorzugsweise vollständig von dieser form- und/oder kraftschlüssigen Fixierung gehalten ist. Somit legt dann auch diese Fixierung die Haltekraft und Klemmkraft fest, mit welcher das Dichtmittel in Position gehalten und geklemmt wird.

Das Kanalelement überwindet dabei zugleich mehrere Probleme des Standes der Technik.

Das Kanalelement ist ein separates Bauteil, insbesondere bezüglich der ersten und zweiten Elemente des Gehäuses. Dadurch kann das Kanalelement, welches das Dichtmittel lagert, einfach beispielsweise mit einem "Auf-Zu-Werkzeug" hergestellt und komplexere Kanalgeometrien hergestellt werden, insbesondere mit Hinterschnitten bezüglich der Zentrallängsachse. Somit ist ein größerer Gestaltungsspielraum bezüglich Durchflussöffnungen oder deren Ausgestaltungen gegeben, um potentielle Strömungsgeräusche zu vermindern. Als "Auf-Zu-Werkzeug" soll eine Gussform, beispielsweise für Kunststoffspritzguss, verstanden werden, die ohne separate Einleger, Schieber, Faltkern, etc. auskommt.

Des Weiteren, weil auf eine stoffschlüssige Fixierung oder Schweißnaht am Kanalelement verzichtet werden kann, treten die mit einer solchen stoffschlüssigen Fixierung verbundenen Nachteile gar nicht auf.

Darüber hinaus, weil das Kanalelement das Dichtmittel hält, ist eine Fixierung des ersten Elements am zweiten Element vollkommen ohne Einfluss auf eine Klemmkraft für das Dichtmittel. Daher können das erste Element und das zweite Element kostengünstig und langlebig miteinander stoffschlüssig, beispielsweise mittels Schweißnaht und mittels Verkleben, verbunden werden. Dies führt auch zum Abdichten. Jedoch ist auch umgekehrt die Klemmkraft ohne Einfluss auf diese Stoffschlussverbindung. Da die Stoffschlussverbindung nicht zugleich auch die Klemmkraft aufbringen muss, ist der Prozess zur Herstellung der Stoffschlussverbindung, insbesondere einer Schweißverbindung, schneller und robuster gestaltet. Die Stoffschlussverbindung kann eine Schweißnaht sein, da sie einfach einbringbar und dauerhaft ist, sowie gute Dichteigenschaften aufweist. Die Stoffschlussverbindung kann eine Klebverbindung sein, da sie einfach herstellbar und dauerhaft ist, sowie gute Dichteigenschaften aufweist.

Vorgeschlagen sind hier zwei Alternativen, wobei beide zu gleichen Vorteilen führen.

Denkbar ist, dass das erste Element einen Strömungseinlass ausbildet oder aufweist und/oder das zweite Element oder ein drittes Element einen Strömungsauslass ausbildet oder aufweist. Dadurch können diese Teile aufgrund von Funktionsintegration zu einem bauraumoptimierten Ventil führen. Der Kanal kann zwischen Strömungseinlass und Strömungsauslass angeordnet sein. Der Kanal kann einen Fluidpfad führen. Die genannten Bereiche können unterschiedliche Bereiche sein. Das Ventil kann ein Druckhalteventil sein, da sich insbesondere dort die erfindungsgemäßen Vorteile auswirken. Das Ventil umfasst das Dichtmittel. Das Dichtmittel kann ein Restdruckhaltedichtmittel sein, vorzugsweise eine Membran. Das Dichtmittel kann scheibenförmig oder ringscheibenförmig ausgebildet sein. Das erste Element, das zweite Element, das dritte Element, das Dichtmittel und/oder das Kanalelement können separat hergestellte Bauteile sein. Das erste Element und/oder das zweite Element und/oder das dritte Element kann/können (ein) Gehäuseelement(e) sein.

Denkbar ist, dass das Kanalelement aus einem Kunststoffmaterial gebildet ist, vorzugsweise aus einem thermoplastischen Material, vorzugsweise mittels Spritzguss hergestellt. Dadurch kann in einfacher und kostengünstiger Weise ein Kanalelement komplexer Geometrie hergestellt werden. Zudem ist das Kunststoffmaterial aufgrund eigener materieller Elastizität besonders geeignet, um durch eigene elastische Verformung form- und/oder kraftschlüssigen fixiert zu werden. Das Kanalelement kann daher in einfacher Weise beispielsweise an- oder eingerastet werden.

Gemäß einer erfindungsgemäßen Weiterbildung des Ventils kann das Kanalelement zumindest an einer seiner Außenseiten einen Kanalabschnitt aufweisen, welcher den Kanal führt oder ausbildet, und/oder das Kanalelement bezüglich der Zentrallängsachse zumindest einen Hinterschnitt aufweisen. Außenseite des Kanalelements kann eine Stirnseite oder eine Umfangsseite sein. Das Kanalelement ermöglicht eine einfache Herstellung und zugleich komplexe Geometrien ohne, dass dafür teure Herstellungswerkzeuge verwendet werden müssten. Denkbar ist, dass der Kanalabschnitt umfangsseitig vom Kanalelement und vom ersten und/oder zweiten Element begrenzt ist, vorzugsweise in einer Querschnittsebene oder Längsschnittebene bezüglich des vom Kanalabschnitts oder dessen geführten Fluidpfades. Dadurch muss der Kanalabschnitt nicht über seinen gesamten Umfang vom Kanalelement ausgebildet sein. Auch an das Kanalelement angrenzende Teile können den Kanalabschnitt mit ausbilden, wodurch Bauraum eingespart werden kann.

Gemäß einer erfindungsgemäßen Weiterbildung des Ventils kann das Kanalelement scheibenförmig oder ringförmig ausgebildet sein. Dabei kann die Höhe des Kanalelements erheblich kleiner als dessen Außendurchmesser sein. Dadurch kann auch das Kanalelement bauraumoptimiert ausgestaltet werden und auch in eine typischerweise kreisförmige Bohrung einlegbar sein, beispielsweise im zweiten Element.

Gemäß einer erfindungsgemäßen Weiterbildung des Ventils kann das Kanalelement zumindest an einer seiner Außenseiten eine Rastnut oder einen Rastvorsprung aufweisen und ein Fixierpartner für das Kanalelement das andere Element von Rastnut und Rastvorsprung aufweisen, wobei Rastnut und Rastvorsprung fixierend ineinander eingreifen, insbesondere derart, dass das Dichtmittel dadurch im dritten Bereich gehalten ist. Vorzugsweise ist die Rastnut oder der Rastvorsprung am Außenumfang des Kanalelements, vorzugsweise umlaufend, angeordnet. Vorzugsweise ist die Rastnut oder der Rastvorsprung am Innenumfang des ersten und/oder zweiten Elements, vorzugsweise umlaufend, angeordnet. Mittels dieser Nut-Vorsprung-Verbindung oder Rastverbindung kann das Kanalelement in einfacher weise einrastet werden, wofür es keinen aufwändigen Verfahrensschritt braucht. Es hat sich gezeigt, dass eine derartige Fixierung ausreichend ist, um das Dichtmittel zufriedenstellend zu halten und zugleich möglichst einfach zu montieren. Der Fixierpartner kann beispielsweise das erste oder zweite Element sein.

Gemäß einer denkbaren Weiterbildung des erfindungsgemäßen Ventils kann der Rastvorsprung einstückig mit dem Kanalelement oder Fixierpartner ausgebildet sein, also aus einem Stück und/oder materialeinheitlich. Das senkt Herstellungskosten. Denkbar ist jedoch auch, dass der Rastvorsprung aus einem abweichenden Material bezüglich Kanalelement oder Fixierpartner ausgebildet ist, beispielsweise aus einem Elastomer. Dadurch kann der Rastvorsprung nicht nur eine fixierende Wirkung, sondern auch eine dichtende Wirkung haben.

Gemäß einer denkbaren Weiterbildung des erfindungsgemäßen Ventils kann das Kanalelement einen Kanalabschnitt aufweist, der querschnittlich kreissegmentförmig, kreissektorförmig oder kreisringabschnittsförmig ausgebildet ist. Beim Abschnitt des Kreisrings bzw. der Kreisringabschnittsform kann der äußere begrenzende Kreisring der Außenumfang des Kanalelements sein und/oder der innere begrenzende Kreisring der Innenumfang des Kanalelements, des Durchgriffs und/oder des Zentralraumes sein oder der Abschnitt des Kreisrings kann vollständig vom Material des Kanalelements umgeben sein, oder die Wandung vom Kanalabschnitt kann vollständig vom Material des Kanalelements ausgebildet sein. Die Kreissegmentform, die Kreissektorform oder die Kreisringabschnittsform kann sich bezüglich der Zentrallängsachse über eine Winkelweite von 180°, vorzugsweise 90° erstrecken. Vorzugsweise verläuft dieser Kanalabschnitt parallel zum Außenumfang des Kanalelements. Diese Ausgestaltungen des Kanalabschnitts erzeugen eine konstruktive Elastizität des Kanalelements. Aufgrund dessen kann das Kanalelement weiter verbessert werden, um durch eigene elastische Verformung form- und/oder kraftschlüssigen fixiert zu werden. Das Kanalelement kann daher in einfacher Weise beispielsweise verrastet werden.

Gemäß einer erfindungsgemäßen Weiterbildung des Ventils kann die Rastnut längsschnittlich eine kreissegmentförmige Nut, eine V-Nut oder eine Nut dreieckiger Gestalt sein und/oder der Rastvorsprung längsschnittlich ein kreissegmentförmiger Rastvorsprung, ein V-Rastvorsprung oder ein Rasthaken sein. In vorteilhafter Weise bilden die entsprechende Nut und der entsprechende Rastvorsprung ein Rastpaar aus. Diese Geometrien sind in einfacher Weise herstellbar, jedoch zugleich geeignet, um ein Halten des Dichtmittels und ein Definieren der Klemmkraft dauerhaft zu gewährleisten.

Gemäß einer erfindungsgemäßen Weiterbildung des Ventils kann das Kanalelement einen Durchgriff aufweisen, durch welchen oder in welchen ein Ringkragen ragen kann, wobei insbesondere der Ringkragen eine Dichtfläche aufweisen kann, welche an dem Dichtmittel anliegen kann. Der Ringkragen ist vom Ventil umfasst, vorzugsweise weist das erste Element den Ringkragen auf. Der Durchgriff kann sich entlang der, vorzugsweise parallel oder konzentrisch zur, Zentrallängsachse durch das Kanalelement erstrecken. Dadurch ist es möglich, dass das Dichtmittel, welches auf einer Seite des Kanalelements anordenbar ist, am Ringkragen anliegen kann, welcher auf der gegenüberliegenden Seite des Kanalelements anordenbar ist. Denkbar ist, dass das Dichtmittel normal-closed ist, also bei Ausbleiben äußerer Krafteinwirkung am Ringkragen dichtend anliegt.

Gemäß einer erfindungsgemäßen Weiterbildung des Ventils kann das zweite Element einen innenumfangsseitigen ersten Abschnitt mit einem ersten Durchmesser aufweisen, in dem das erste Element angeordnet ist, vorzugsweise gegen eine erste Fläche anliegend, und/oder das zweite Element einen innenumfangsseitigen zweiten Abschnitt mit einem zweiten Durchmesser aufweisen, in dem das Kanalelement angeordnet ist, vorzugsweise gegen eine zweite Fläche anliegend. Denkbar ist auch, dass das zweite Element einen innenumfangsseitigen Abschnitt mit einem Durchmesser aufweist, in dem die vorzugsweise vormontierte Baugruppe aus Dichtmittel, Kanalelement und erstem Element angeordnet ist, vorzugsweise gegen eine Fläche anliegend. Das zweite Element kann also gestuft ausgebildet sein, wobei die jeweiligen Absätze und Flächen als Montagehilfen und/oder Positionierhilfen dienen können, um bei Montage eine Endlage zu definieren. Dadurch ist die Montage erheblich vereinfacht und auf weitere positionsanzeigende Mittel, die im Stand der Technik durchaus obligatorisch sind, kann verzichtet werden. Insbesondere muss bei Anliegen des ersten Elements gegen die erste Fläche keine Kraft in Axialrichtung auf den Gehäusekörper aufgebracht werden, um eine Stoffschlussverbindung zwischen dem ersten und zweiten Gehäuseteil zu sichern. Die beiden Durchmesser sind daher mit Vorteil unterschiedlich. Zur Ausbildung eines bauraumoptimierten Ventils ist denkbar, dass die beiden Abschnitte in Axialrichtung unmittelbar aneinander anschließen. Die Abschnitte weisen zudem einen weiteren Vorteil auf. Da sie die Einbautiefe des ersten Elements begrenzen, kann auf jeden Fall verhindert werden, dass ein zu tiefes Einbringen des ersten Elements in den entsprechenden Abschnitt dazu führt, dass eine Kraft in das Kanalelement eingebracht wird, welche die Klemmkraft für das Dichtmittel in ungewollter Weise verändert.

Gemäß einer erfindungsgemäßen Weiterbildung des Ventils kann das Kanalelement in Richtung der Zentrallängsachse gegenüber der ersten Fläche zurückstehen oder höchstens bündig dazu sein und/oder können die beiden Elemente druckfrei aneinander anliegen, vorzugsweise in dem zweiten Bereich und/oder das erste Element und das Kanalelement druckfrei aneinander anliegen. Denkbar ist auch, dass das Kanalelement druckfrei am zweiten Element anliegt, wobei dies bei Ausbildung einer Baugruppe mit dem Kanalelement und dem ersten Element besonders vorteilhaft ist. Auch hier konzentriert sich der jeweilige Vorteil jeder Ausgestaltung auf die Nichtveränderung der Klemmkraft für das Dichtmittel, sowie darauf, dass die Stoffschlussverbindung während ihrer Entstehung, beispielsweise dem Aushärten bei einer Klebeverbindung oder dem Erstarren bei einer Schweißverbindung, nicht durch die Klemmkraft in Axialrichtung belastet werden muss. Vielmehr kann die Stoffschlussverbindung unabhängig von Axialkräften auch außerhalb irgendwelcher Vorrichtungen oder außerhalb der Montageanlage sich in Ruhe weiter ausbilden. So sind kürzere Zykluszeiten innerhalb der Montageanlagen möglich. Ferner ist die Qualität der Stoffschlussverbindung wesentlich Zykluszeitunabhängiger.

Gemäß einer erfindungsgemäßen Weiterbildung des Ventils kann das Kanalelement einen Zentralraum aufweisen, wobei der Zentralraum den Kanal zumindest abschnittsweise führt oder ausbildet, wobei der Zentralraum vorzugsweise zum ersten und/oder zweiten Element offen und/oder wahlweise zu öffnen ist, wobei der Zentralraum vorzugsweise koaxial zur Zentral- längsachse angeordnet ist. Der Zentralraum hat den Vorteil, dass dadurch das Kanalelement und das erste Element keine definierte Ausrichtung zueinander aufweisen müssen. Der vom ersten Element kommende Kanalabschnitt kann in einfacher Weise in den Zentralraum führen, vollkommen unabhängig von der Winkelstellung von Kanalelement und erstem Element bezüglich der Zentrallängsachse zueinander. Vom Zentralraum kann ein Kanalabschnitt abragen, vorzugsweise winklig zur Zentrallängsachse. Der Durchgriff kann den Zentralraum zumindest abschnittsweise ausbilden.

Gemäß einer denkbaren Weiterbildung des erfindungsgemäßen Ventils kann/können das erste Element, das dritte Element, das Dichtmittel und/oder das Kanalelement bezüglich einer Achse, vorzugsweise der Zentrallängsachse, rotationssymmetrisch ausgebildet sein, vorzugsweise rotationssymmetrisch im mathematisch engeren Sinne. Eine Drehung um jeden beliebigen Winkel bildet das erste/dritte Element, das Dichtmittel und/oder das Kanalelement auf sich selbst ab. Dadurch können geometrisch einfache Teile kostengünstig hergestellt werden, wobei weder deren Montage noch deren Endlage nach Montage relevant sein kann.

Gemäß einer denkbaren Weiterbildung des erfindungsgemäßen Ventils kann das Kanalelement und/oder das erste Element eine Aufnahme für das Dichtmittel aufweisen. Dadurch kann die Position des Dichtmittels bei Vormontage oder Montage bestimmt werden und ein Verrutschen verhindert werden.

Gemäß einer denkbaren Weiterbildung des erfindungsgemäßen Ventils kann das erste Element einen Stützring aufweisen, gegen welchen das Kanalelement anliegen kann. Dadurch kann das Kanalelement filigran ausgebildet sein, da es vom Stützring gestützt werden kann. Der Stützring kann die Aufnahme für das Dichtmittel aufweisen. Der Stützring kann umfangsseitig des Ringkragens angeordnet sein. Zwischen Ringkragen und Stützring kann ein Ringraum ausgebildet sein, welcher den Kanal zumindest abschnittsweise führt oder ausbildet.

Gemäß einer denkbaren Weiterbildung des erfindungsgemäßen Ventils kann das erste Element, das Kanalelement und das dazwischen im dritten Bereich gehaltene Dichtmittel eine Baugruppe ausbilden. Diese Baugruppe und deren Vormontage unabhängig und außerhalb des zweiten Elements ergibt die Vorteile modularer Bauweise, da diese eine Baugruppe für eine Vielzahl unterschiedlich ausgestalteter zweiter Elemente verwendet werden kann, ohne verändert zu werden.

Erfindungsgemäß wird ein Verfahren zur Herstellung eines Ventils gemäß der Offenbarung vorgeschlagen, umfassend die folgenden Schritte:
- Bereitstellen eines ersten Elements, eines zweiten Elements, eines Dichtmittels und eines Kanalelements,
- Form- und/oder kraftschlüssiges Verbinden des Kanalelements mit einem der beiden Elemente derart, dass das Dichtmittel zwischen dem Kanalelement und dem entsprechenden der beiden Elemente in einem dritten Bereich gehalten ist,
- Verbinden des anderen Elements der beiden Elemente mit demjenigen Element, mit welchem das Kanalelement verbunden ist, vermittels einer Stoffschlussverbindung in einem ersten Bereich,
- wobei die beiden Elemente in einem zweiten Bereich aneinander anliegen oder unmittelbar benachbart zueinander angeordnet sind.

Die bereits oben bezüglich des Ventils beschriebenen Vorteile ergeben sich analog auch für das Verfahren, worauf hiermit verwiesen wird.

Denkbar ist, dass gemäß erster Alternative bei der Montage das Dichtmittel separat vom Kanalelement in den Gehäusekörper oder in das zweite Element eingebracht werden kann, wobei das Kanalelement separat vom Dichtmittel dann nachfolgend an- oder eingebracht werden kann. Sodann ist das Kanalelement form- und/oder kraftschlüssig fixiert und hält das Dichtmittel im dritten Bereich. Hier findet eine gestapelte Montage der beiden Teile statt. Denkbar ist auch, dass das Dichtmittel zunächst während einer Vormontage am oder im Kanalelement angeordnet wird, um eine Baugruppe zu bilden. Sodann kann diese Dichtmittel-Kanalelement-Baugruppe form- und/oder kraftschlüssig im Gehäusekörper oder im zweiten Element fixiert werden, um das Dichtmittel im dritten Bereich zu halten. Nachfolgend kann das erste Element in oder an den Gehäusekörper oder das zweiten Element angeordnet und stoffschlüssig verbunden werden, beispielsweise mittels Schweißnaht.

Denkbar ist, dass gemäß zweiter Alternative eine Vormontage zu Ausbildung einer Baugruppe derart erfolgen kann, dass das Dichtmittel aufgrund der form- und/oder kraftschlüssigen Fixierung des Kanalelements am oder im ersten Element in dem dritten Bereich zwischen dem Kanalelement und dem ersten Element gehalten ist. Dadurch ist zunächst eine Baugruppe aus dem Dichtmittel, dem Kanalelement und dem ersten Element ausbildbar. Diese Baugruppe kann dann im oder am Gehäusekörper oder zweiten Element angeordnet und mit dem Gehäusekörper oder zweiten Element verbunden werden, beispielsweise mittels Schweißnaht.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Längsschnittansicht eines erfindungsgemäßen Ventils erster Ausführungsform;
- Fig. 2: einen Herstellungsschritt des Ventils erster Ausführungsform;
- Fig. 3: eine Längsschnittansicht eines erfindungsgemäßen Ventils zweiter Ausführungsform;
- Fig. 4: einen Herstellungsschritt eines erfindungsgemäßen Ventils dritter Ausführungsform, und
- Fig. 5: eine Längsschnittansicht des erfindungsgemäßen Ventils dritter Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

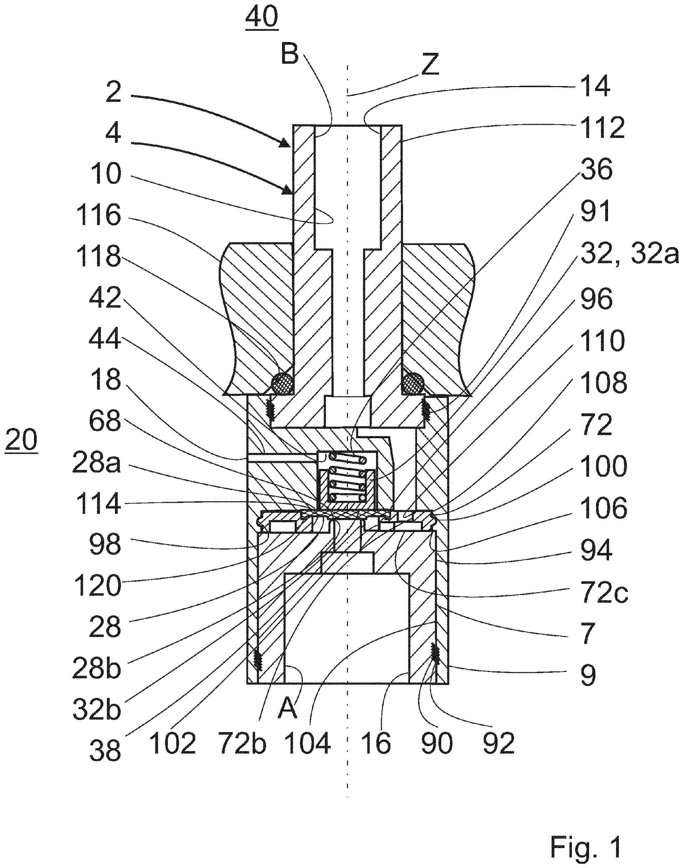

In Figur 1 ist eine zentrale Längsschnittansicht eines erfindungsgemäßen Ventils 2 erster Ausführungsform als Druckhalteventil gezeigt.

Das Ventil 2 umfasst einen Gehäusekörper 4, der von einer Zentrallängsachse Z durchsetzt ist. Der Gehäusekörper 4 umfasst ein erstes Element 7, ein zweites Element 9 und ein drittes Element 112 (Gehäuseelemente). Das erste Element 7 ist mit dem zweiten Element 9 vermittels einer Schweißnaht 90 verbunden, die in einem ersten Bereich 92 ausgebildet ist. Diese Schweißnaht 90 dichtet das Ventil 2 ab. In einem zweiten Bereich 94 können die beiden Elemente 7, 9 aneinander anliegen oder unmittelbar benachbart zueinander angeordnet sein. Das dritte Element 112 ist mit dem zweiten Element 9 vermittels einer Schweißnaht 91 verbunden. Diese Schweißnaht 91 dichtet das Ventil 2 ab. Das erste Element 7 bildet einen Strömungseinlass A aus oder weist diesen auf und das dritte Element 112 bildet einen Strömungsauslass B aus oder weist diesen auf. Je nach Richtung des Fluidflusses oder des Fluidpfades können Strömungseinlass A und Strömungsauslass B auch vertauscht sein. Zudem weist das erste Element 7 eine zweite Ventilöffnung 16 und das dritte Element 112 eine erste Ventilöffnung 14 auf. Zwischen den Ventilöffnungen 14, 16 führt ein Kanal 10 durch den Gehäusekörper 4, der einen Fluidpfad führt. Die erste Ventilöffnung 14 kann fluidisch an ein Luftfedervolumen 40 anschließbar sein. Das erste Element 7 weist einen Ringkragen 38 auf, der stirnseitig abragt. Endseitig weist der Ringkragen 38 eine Dichtfläche 68 auf. Das zweite Element 9 weist einen Gegendruckraum 42 auf, der über einen Nebenkanal 44 mit einer dritten Ventilöffnung 18 verbunden ist. So kann der Gegendruckraum 42 mit einer Umgebung 20 des Ventils 2 fluidisch verbunden sein.

Das Ventil 2 umfasst zudem ein scheibenförmiges Dichtmittel 28, welches im Kanal 10 angeordnet ist. Das Dichtmittel 28 kann den Kanal 10 wahlweise verschließen oder den effektiven Öffnungsquerschnitt des Kanals 10 reduzieren. Das Dichtmittel 28 ist ein Restdruckhaltedichtmittel als Membran. Das Dichtmittel 28 weist eine erste Einwirkfläche 28a und eine zweite Einwirkfläche 28b auf. Das Dichtmittel 28 liegt bei Ausbleiben äußerer Krafteinwirkung an der Dichtfläche 68 des Ringkragens 38 dichtend an - der Kanal 10 ist verschlossen.

Das Ventil 2 umfasst des Weiteren ein ringscheibenförmiges Kanalelement 72, welches als Kunststoffspritzteil ausgeführt ist. Außenumfangsseitig weist das Kanalelement 72 einen längsschnittlich betrachtet kreissegmentförmigen und umlaufenden Rastvorsprung 100 auf, der einstückig mit dem Kanalelement 72 ausgebildet ist und formschlüssig in eine innenumfangsseitig angeordnete und längsschnittlich betrachtet kreissegmentförmige und umlaufende Rastnut 98 im zweiten Element 9 eingreift, um das Kanalelement 72 via der Rastverbindung zu fixieren. Das zweite Element 9 ist hier der Fixierpartner. Das Kanalelement 72 weist einen Durchgriff 102 auf, in welchen der Ringkragen 38 einragt. Der Durchgriff 102 erstreckt sich entlang und konzentrisch zur Zentrallängsachse Z durch das Kanalelement 72. Das Kanalelement 72 umfasst zudem einen Zentralraum 114, der außenumfangsseitig vom Durchgriff 102, innenumfangsseitig vom Ringkragen 38, axial einends vom Dichtmittel 28 und axial anderenends vom ersten Element 7 begrenzt ist. Der Zentralraum 114 ist koaxial zur Zentrallängsachse Z angeordnet. Der Zentralraum 114 führt den Kanal 10 abschnittsweise und ist zum ersten Element 7 hin offen oder via des Dichtmittels 28 zu öffnen. Vom Zentralraum 114 ragt ein Kanalabschnitt 72c rechtwinklig bezüglich der Zentrallängsachse Z ab. Der Kanalabschnitt 72c führt oder bildet den Kanal 10 zumindest abschnittsweise aus und ist an einer stirnseitigen Außenseite des Kanalelements 72 angeordnet. Erkennbar ist, dass der Kanalabschnitt 72c umfangsseitig vom Kanalelement 72 und vom ersten Element 7 begrenzt ist. Neben dem Kanalabschnitt 72c weist das Kanalelement 72 zudem einen weiteren Kanalabschnitt 72b auf, der fluidisch an den Kanalabschnitt 72c anschließt. Der Kanalabschnitt 72b ist querschnittlich kreissegmentförmig, kreissektorförmig oder kreisringabschnittsförmig ausgebildet, weshalb der Außenumfang des Kanalelements 72 elastisch radial einwärts gedrückt werden kann, um die formschlüssige Fixierung zu erreichen. Die Wandung vom Kanalabschnitt 72b ist vollständig vom Material des Kanalelements 72 ausgebildet.

Das Dichtmittel 28 ist in einem dritten Bereich 96 zwischen dem Kanalelement 72 und dem zweiten Element 9 durch die Rastverbindung gehalten. Diese Rastverbindung bestimmt die Klemmkraft des Dichtmittels 28. Für das Dichtmittel 28 weist das Kanalelement 72 eine Aufnahme 120 auf.

Das zweite Element 9 weist innenumfangsseitig einen ersten Abschnitt 104 mit einem ersten Durchmesser auf, in dem das erste Element 7 angeordnet ist. Das erste Element 7 liegt dabei gegen eine erste Fläche 106 an. Das zweite Element 9 weist zudem einen innenumfangsseitigen zweiten Abschnitt 108 mit einem zweiten Durchmesser auf, in welchem das Kanalelement 72 angeordnet ist. Das Kanalelement 72 kann gegen eine zweite Fläche 110 anliegen.

Das Kanalelement 72 ist in Richtung der Zentrallängsachse Z höchstens bündig zur ersten Fläche 106 angeordnet. Das erste Element 7 und das Kanalelement 72 liegen ebenso druckfrei aneinander an, wie das erste Element 7 und das zweite Element 9.

Im Gegendruckraum 72 ist ein Stellmittel 32 angeordnet, welches entlang der Zentrallängsachse Z verschiebbar ist. Dazu ist es schwimmend von dem zweiten Element 9 geführt. Das Stellmittel 32 weist einen Hohlzylinderabschnitt 32a auf, der seiner Führung dient und im Gegendruckraum 42 angeordnet ist. Das Stellmittel 32 weist zudem einen Bodenabschnitt 32b auf. Das Stellmittel 32 kann daher als topfförmig ausgestaltet bezeichnet werden. Der Bodenabschnitt 32b liegt gegen die Einwirkfläche 28a des Dichtmittels 28 an. Im Gegendruckraum 42 ist zudem eine Feder 36 als Kraftspeichermittel angeordnet. Die Feder 36 ist vom Typ einer Schraubendruckfeder. Die Feder 36 stützt sich einends an dem Stellmittel 32 oder dessen Bodenabschnitt 32b und anderenends an dem zweiten Element 9 ab. Das Dichtmittel 28 ist daher gegen die Federkraft der Feder 36 in die Schließstellung an den Ringkragen 38 vorgespannt. Ein Abheben von der Dichtfläche 68 am Ringkragen 38 erfolgt durch Druck auf die Einwirkfläche 28b und gegen diese Federkraft und gegebenenfalls zusätzlich gegen den im Gegendruckraum 42 herrschenden Druck.

Das Ventil 2 ist in ein nicht weiter bezeichnetes Bauteil 116 eingesetzt, wobei zwischen beiden ein Dichtungsring 118 angeordnet ist. Das Bauteil 116 kann beispielweise eine Luftfeder sein.

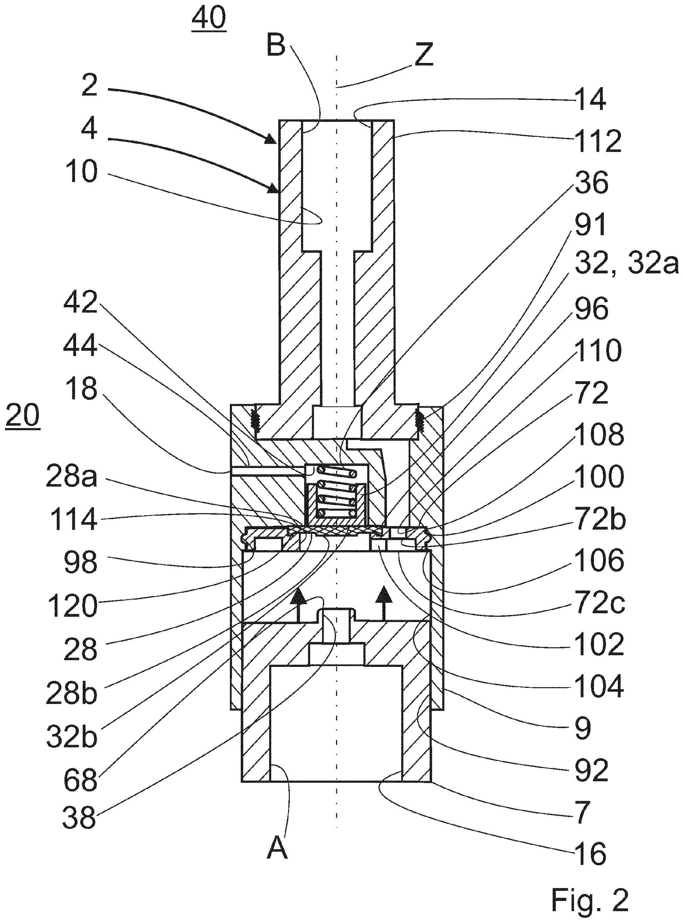

In Figur 2 ist von einem Herstellungsverfahren des Ventils 2 der Figur 1 ein Herstellungsschritt gezeigt.

Eine "Dichtmittel 28 - Kanalelement 72 - Baugruppe" wurde außerhalb des zweiten Elements 9 vormontiert und dann im zweiten Element 9 durch die Rastverbindung montiert. Das Kanalelement 72 ist sodann form- und/oder kraftschlüssig fixiert und hält das Dichtmittel 28 im dritten Bereich 96. Zu diesem Zeitpunkt ist die Haltekraft aufgebracht und die Klemmkraft des Dichtmittels 28 abschließend festgelegt. Gezeigt ist nun, dass erst danach das erste Element 7 entlang der Pfeile in das zweite Element 9 eingesetzt und nach erfolgter Positionierung gegen die Fläche 106 mit dem zweiten Element 9 verschweißt wird. Dadurch ist die Schweißnaht 90 ausgebildet.

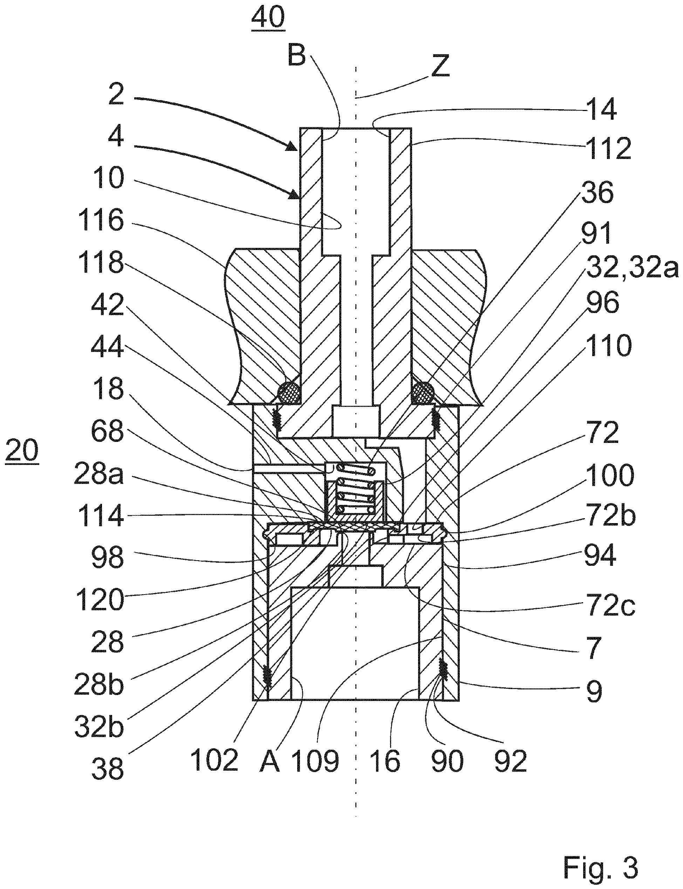

In Figur 3 ist eine zentrale Längsschnittansicht eines erfindungsgemäßen Ventils 2 zweiter Ausführungsform als Druckhalteventil gezeigt.

Zur Vermeidung von Wiederholungen sollen nachstehend von Figur 3 lediglich die Unterschiede zu Figur 1 beschrieben werden. Nicht beschriebene Merkmale sollen gleichsam als offenbart und beschrieben gelten.

Erkennbar ist, dass das zweite Element 9 nun innenumfangsseitig nicht mehr gestuft ausgeführt ist, sondern nur noch einen Abschnitt 109 mit einem Durchmesser für das Kanalelement 72 und das erste Element 7 aufweist. Auch hier liegen das erste Element 7 und das Kanalelement 72 druckfrei aneinander an, um die festgelegte Klemmkraft des Dichtmittel 28 nicht zu verändern.

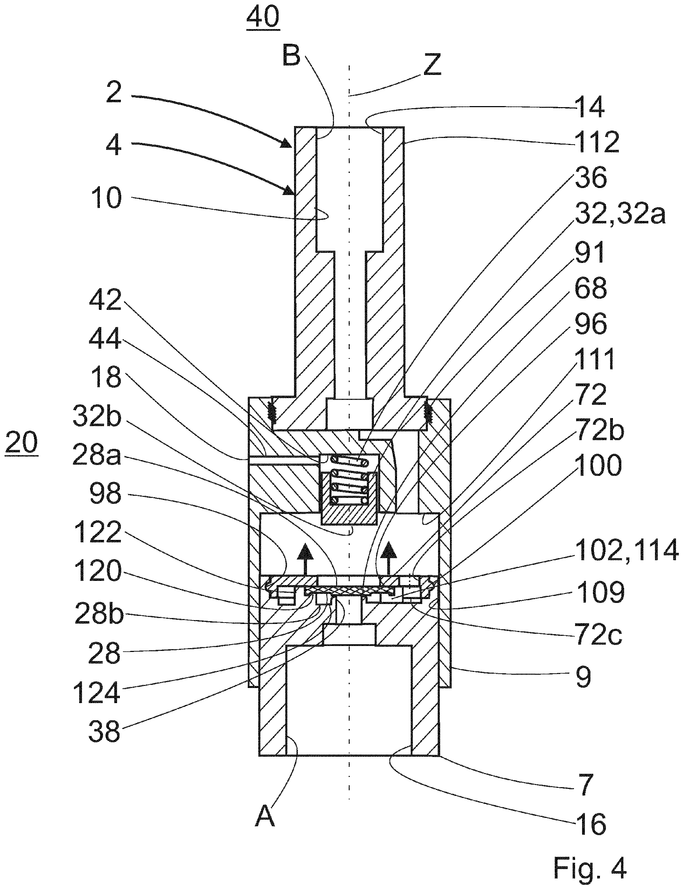

In Figur 4 ist von einem Herstellungsverfahren eines erfindungsgemäßen Ventils 2 dritter Ausführungsform als Druckhalteventil ein Herstellungsschritt gezeigt.

Zur Vermeidung von Wiederholungen sollen nachstehend von Figur 4 lediglich die Unterschiede zu Figur 1 beschrieben werden. Nicht beschriebene Merkmale sollen gleichsam als offenbart und beschrieben gelten.

Das Kanalelement 72 ist nunmehr vermittels der Rastverbindung nicht mehr an dem zweiten Element 9, sondern an dem ersten Element 7 fixiert. Das erste Element 7 ist hier der Fixierpartner. Zudem ist das Dichtmittel 28 nunmehr zwischen dem Kanalelement 72 und dem ersten Element 7 im dritten Bereich 96 gehalten. Hierzu ist eine "Dichtmittel 28 - Kanalelement 72 - erstes Element 7 - Baugruppe" außerhalb des zweiten Elements 9 vormontiert. Figur 4 zeigt das Einsetzen dieser Baugruppe in den Abschnitt 109 entlang der Pfeile.

Erkennbar ist zudem, dass das zweite Element 9 nun innenumfangsseitig nicht mehr gestuft ausgeführt ist, sondern nur noch einen Abschnitt 109 mit einem Durchmesser für diese Baugruppe aufweist.

Das erste Element 7 weist umfangsseitig des Ringkragens 38 einen Stützring 122 auf, gegen welchen das Kanalelement 72 anliegt und der stirnseitig abragt. Der Stützring 122 weist nun die Aufnahme 120 für das Dichtmittel 28 auf. Das Dichtmittel 28 ist zwischen erstem Element 7 und Kanalelement 72 gehalten. Der Stützring 122 ist umfangsseitig des Ringkragens 38 angeordnet und koaxial zur Zentrallängsachse Z angeordnet. Zwischen Ringkragen 38 und Stützring 122 ist ein Ringraum 124 ausgebildet, welcher den Kanal 10 zumindest abschnittsweise führt oder ausbildet. Der Ringraum 124 ist zudem begrenzt vom Dichtmittel 28.

Das Kanalelement 72 umfasst zudem den Zentralraum 114, der außenumfangsseitig vom Durchgriff 102 oder dem Stützring 122, innenumfangsseitig vom Ringkragen 38, axial einends vom Dichtmittel 28 und axial anderenends vom ersten Element 7 begrenzt ist.

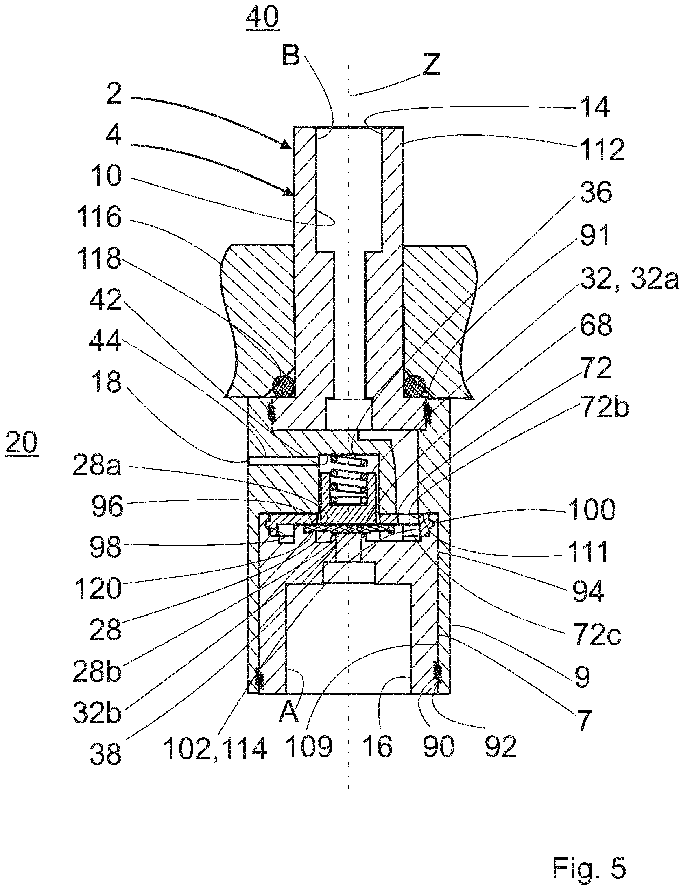

In Figur 5 ist das abschließend hergestellte oder montierte Ventil 2 dritter Ausführungsform als Druckhalteventil gezeigt.

Diese Baugruppe kann dann anschließend im Abschnitt 109 des zweiten Elements 9 angeordnet oder eingeschoben werden. Die Baugruppe kann in eine Endlage kommen, sobald das erste Element 7 an einer Fläche 111 des zweiten Elements 9 zur Anlage kommt. In dieser Endlage können das Kanalelement 72 und das zweite Element 9 druckfrei aneinander anliegen. Dadurch wird die bereits zuvor bei der Baugruppenvormontage festgelegte Klemmkraft des Dichtmittels 28 nicht verändert.

Gezeigt ist nun, dass nach erfolgter Positionierung gegen die Fläche 111 das erste Element 7 mit dem zweiten Element 9 verschweißt wird. Dadurch ist die Schweißnaht 90 ausgebildet.

Unter Vormontage soll ein Vorgang verstanden werden, durch welchen eine Baugruppe als solche komplett gefertigt wird. Nach Vormontage kann die Baugruppe als solche komplett sein. Unter Montage soll ein Vorgang verstanden werden, durch welchen Bauteile oder Baugruppen an oder in ihrem betriebsmäßigen Bestimmungsort festgelegt wird/werden, um ein Ventil 2 auszubilden.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 2 | Ventil | 100 | Rastvorsprung |
| 4 | Gehäusekörper | 102 | Durchgriff |
| 7 | erstes Element | 104 | Abschnitt |
| 9 | zweites Element | 106 | Fläche |
| 10 | Kanal | 108 | Abschnitt |
| 14 | erste Ventilöffnung | 109 | Abschnitt |
| 16 | zweite Ventilöffnung | 110 | Fläche |
| 18 | dritte Ventilöffnung | 111 | Fläche |
| 20 | Umgebung | 112 | drittes Element |
| 28 | Dichtmittel | 114 | Zentralraum |
| 28a | Einwirkfläche | 116 | Bauteil |
| 28b | Einwirkfläche | 118 | Dichtungsring |
| 32 | Stellmittel | 120 | Aufnahme |
| 32a | Hohlzylinderabschnitt | 122 | Stützring |
| 32b | Bodenabschnitt | 126 | Ringraum |
| 36 | Feder | | |
| 38 | Ringkragen | A | Strömungseinlass |
| 40 | Luftfedervolumen | B | Strömungsauslass |
| 42 | Gegendruckraum | Z | Zentrallängsachse |
| 44 | Nebenkanal | | |
| 68 | Dichtfläche | | |
| 72 | Kanalelement | | |
| 72b | Kanalabschnitt | | |
| 72c | Kanalabschnitt | | |
| 90 | Schweißnaht | | |
| 91 | Schweißnaht | | |
| 92 | erster Bereich | | |
| 94 | zweiter Bereich | | |
| 96 | dritter Bereich | | |
| 98 | Rastnut | | |

## Patentansprüche

1. Ventil für eine Luftfeder, umfassend einen Gehäusekörper (4), der von einer Zentrallängsachse (Z) durchsetzt ist und einen Kanal (10) umfasst, wobei der Gehäusekörper (4) ein erstes Element (7) und ein zweites Element (9) umfasst, welche vermittels einer Stoffschlussverbindung in einem ersten Bereich (92) verbunden sind und in einem zweiten Bereich (94) aneinander anliegen oder unmittelbar benachbart zueinander angeordnet sind, wobei im Kanal (10) ein Dichtmittel (28) angeordnet ist, welches den Kanal (10) verschließen oder den effektiven Öffnungsquerschnitt des Kanals (10) reduzieren kann, **dadurch gekennzeichnet, dass** das Ventil (2) ein Kanalelement (72) umfasst, welches den Kanal (10) zumindest abschnittsweise führt oder ausbildet, wobei das Kanalelement (72) im Gehäusekörper (4) form- und/oder kraftschlüssig fixiert ist und das Kanalelement (72) das Dichtmittel (28) in einem dritten Bereich (96) zwischen sich und dem zweiten Element (9) hält oder das Kanalelement (72) im oder am ersten Element (7) form- und/oder kraftschlüssig fixiert ist und das Kanalelement (72) das Dichtmittel (28) in einem dritten Bereich (96) zwischen sich und dem ersten Element (7) hält.

2. Ventil nach Anspruch 1, **dadurch gekennzeichnet, dass** das Kanalelement (72) zumindest an einer seiner Außenseiten einen Kanalabschnitt (72c) aufweist, welcher den Kanal (10) führt oder ausbildet, und/oder das Kanalelement (72) bezüglich der Zentrallängsachse (Z) zumindest einen Hinterschnitt aufweist.

3. Ventil nach einem der voranstehenden Ansprüche, **dadurch gekennzeichnet, dass** das Kanalelement (72) scheibenförmig oder ringförmig ausgebildet ist.

4. Ventil nach einem der voranstehenden Ansprüche, **dadurch gekennzeichnet, dass** das Kanalelement (72) zumindest an einer seiner Außenseiten eine Rastnut (98) oder einen Rastvorsprung (100) aufweist und ein Fixierpartner für das Kanalelement (72) das andere Element von Rastnut (98) und Rastvorsprung (100) aufweist, wobei Rastnut (98) und Rastvorsprung (100) fixierend ineinander eingreifen, insbesondere derart, dass das Dichtmittel (28) dadurch im dritten Bereich (96) gehalten ist.

5. Ventil nach Anspruch 4, **dadurch gekennzeichnet, dass** die Rastnut (98) längsschnittlich eine kreissegmentförmige Nut, eine V-Nut oder eine Nut dreieckiger Gestalt ist und/oder der Rastvorsprung (100) längsschnittlich ein kreissegmentförmiger Rastvorsprung, ein V-Rastvorsprung oder ein Rasthaken ist.

6. Ventil nach einem der voranstehenden Ansprüche, **dadurch gekennzeichnet, dass** das Kanalelement (72) einen Durchgriff (102) aufweist, durch welchen oder in welchen ein Ringkragen (38) ragt, wobei insbesondere der Ringkragen (38) eine Dichtfläche (68) aufweist, welche an dem Dichtmittel (28) anliegen kann.

7. Ventil nach einem der voranstehenden Ansprüche, **dadurch gekennzeichnet, dass** das zweite Element (9) einen innenumfangsseitigen ersten Abschnitt (104) mit einem ersten Durchmesser aufweist, in dem das erste Element (7) angeordnet ist, vorzugsweise gegen eine erste Fläche (106) anliegend, und/oder das zweite Element (9) einen innenumfangsseitigen zweiten Abschnitt (108) mit einem zweiten Durchmesser aufweist, in dem das Kanalelement (72) angeordnet ist, vorzugsweise gegen eine zweite Fläche (110) anliegend.

8. Ventil nach einem der voranstehenden Ansprüche oder Anspruch 7, **dadurch gekennzeichnet, dass** das Kanalelement (72) in Richtung der Zentrallängsachse (Z) gegenüber der ersten Fläche (106) zurücksteht oder höchstens bündig dazu ist und/oder die beiden Elemente (7, 9) druckfrei aneinander anliegen, vorzugsweise in dem zweiten Bereich (94), und/oder das erste Element (7) und das Kanalelement (72) druckfrei aneinander anliegen.

9. Ventil nach einem der voranstehenden Ansprüche, **dadurch gekennzeichnet, dass** das Kanalelement (72) einen Zentralraum (114) aufweist, der den Kanal (10) zumindest abschnittsweise führt oder ausbildet, der vorzugsweise zum ersten und/oder zweiten Element (7, 9) offen und/oder wahlweise zu öffnen ist, der vorzugsweise koaxial zur Zentrallängsachse (Z) angeordnet ist.

10. Verfahren zur Herstellung eines Ventils (2), umfassend die folgenden Schritte:
a. Bereitstellen eines ersten Elements (7), eines zweiten Elements (9), eines Dichtmittels (28) und eines Kanalelements (72),
b. Form- und/oder kraftschlüssiges Verbinden des Kanalelements (72) mit einem der beiden Elemente (7, 9) derart, dass das Dichtmittel (28) zwischen dem Kanalelement (72) und dem entsprechenden der beiden Elemente (7, 9) in einem dritten Bereich (96) gehalten ist,
c. Verbinden des anderen Elements (7, 9) der beiden Elemente (7, 9) mit demjenigen Element (7, 9), mit welchem das Kanalelement (72) verbunden ist, vermittels einer Stoffschlussverbindung in einem ersten Bereich (92),
d. wobei die beiden Elemente (7, 9) in einem zweiten Bereich (94) aneinander anliegen oder unmittelbar benachbart zueinander angeordnet sind.
